# EUROPEAN PATENT APPLICATION

(11) **EP 4 404 108 A1**
(43) Date of publication of application: **24.07.2024**
(21) Application number: 21957500.8
(22) Date of filing: 15.09.2021
(51) Int. Cl.: G06N 20/00, G06N 5/02

(54) **INFORMATION PROCESSING PROGRAM, INFORMATION PROCESSING METHOD, AND INFORMATION PROCESSING DEVICE**

(71) Applicant: FUJITSU LIMITED, Kawasaki-shi, Kanagawa 211-8588 (JP)
(72) Inventor: IWASHITA, Hiroaki, Kawasaki-shi, Kanagawa 211-8588 (JP); GOTO, Keisuke, Kawasaki-shi, Kanagawa 211-8588 (JP); OHORI, Kotaro, Kawasaki-shi, Kanagawa 211-8588 (JP)
(74) Representative: Hoffmann Eitle
(86) International application number: PCT/JP2021/033991
(87) International publication number: WO 2023/042318

(57) **Abstract**

An information processing apparatus receives a target data set and classifies the target data set into any of multiple classes with a classifier. The information processing apparatus determines whether or not a positive pattern matching the target data set exists by referring to a positive pattern management table. The information processing apparatus determines whether or not a negative pattern matching target data set exists by referring to a negative pattern management table. The information processing apparatus positively evaluates the classification result of the target data set when the positive pattern exists and the negative pattern does not exist. The information processing apparatus outputs a message indicating that the classification result of the target data set is positively evaluated so that the user may refer to the message.

## Description

### FIELD

The embodiment discussed herein is related to an information processing program, an information processing method, and an information processing apparatus.

### BACKGROUND

In the related art, there is a classifier to classify input data.

As the related art, for example, there is a technique of approximating a classifier with a model easily interpretable by a user.

### SUMMARY

### TECHNICAL PROBLEM

However, in the related art, it is difficult for a user to recognize how reliable a data classification result obtained with a classifier is. For example, a classifier obtained by deep learning may be a black box model, and a user may have no way to recognize how reliable a data classification result with the classifier is even when the user refers to parameters of the classifier.

According to one aspect, an object of the present disclosure is to output information that enables evaluation of the reliability of a data classification result with a classifier.

### SOLUTION TO PROBLEM

According to one embodiment, there are provided an information processing program, an information processing method, and an information processing apparatus that acquire an index value indicating how many data sets have correct classification results in a case of classifying data sets for each of a plurality of different attribute value patterns with a classifier, identify each first attribute value pattern having a relatively small number of data sets with the correct classification results among the plurality of attribute value patterns based on the acquired index values, determine, in a case of classifying a target data set, whether or not the first attribute value pattern matching the target data set exists among the identified first attribute value patterns, and output the determination result.

### ADVANTAGEOUS EFFECTS OF INVENTION

According to one aspect, it is possible to output information that enables evaluation of the reliability of a data classification result with a classifier.

### BRIEF DESCRIPTION OF DRAWINGS

FIG. 1 is an explanatory diagram illustrating an example of an information processing method according to an embodiment.
FIG. 2 is an explanatory diagram illustrating an example of a reliability evaluation system 200.
FIG. 3 is a block diagram illustrating a hardware configuration example of an information processing apparatus 100.
FIG. 4 is a block diagram illustrating a functional configuration example of the information processing apparatus 100.
FIG. 5 is an explanatory diagram illustrating an example of multiple data sets to serve as samples.
FIG. 6 is an explanatory diagram illustrating an example of a classifier.
FIG. 7 is an explanatory diagram illustrating an example of calculating a correct classification count and an incorrect classification count for each attribute value pattern.
FIG. 8 is an explanatory diagram illustrating an example of identifying each attribute value pattern having a relatively large number of data sets with correct classification results.
FIG. 9 is an explanatory diagram illustrating an example of identifying each attribute value pattern having a relatively small number of data sets with correct classification results.
FIG. 10 is an explanatory diagram illustrating an example of evaluating the reliability of a classification result of a target data set (part 1).
FIG. 11 is an explanatory diagram illustrating an example of evaluating the reliability of a classification result of a target data set (part 2).
FIG. 12 is a flowchart illustrating an example of a determination processing procedure.
FIG. 13 is a flowchart illustrating an example of a classification processing procedure.
FIG. 14 is a flowchart illustrating an example of a selection processing procedure.

### DESCRIPTION OF EMBODIMENTS

Hereinafter, an embodiment of an information processing program, an information processing method, and an information processing apparatus according to the present disclosure will be described in detail with reference to the drawings.

### (Example of Information Processing Method According to Embodiment)

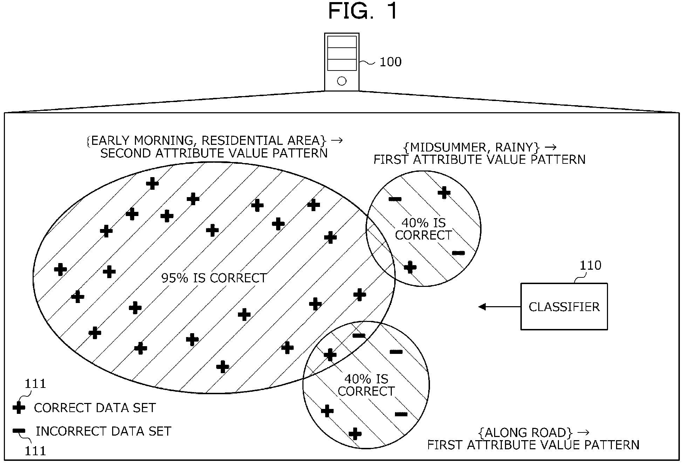

FIG. 1 is an explanatory diagram illustrating an example of an information processing method according to an embodiment. An information processing apparatus 100 is a computer for outputting information that enables evaluation of the reliability of a data classification result with a classifier. For example, the information processing apparatus 100 is a server, a personal computer (PC), or the like.

The classifier has a function of classifying input data sets. For example, the classifier classifies an input data set into any one of multiple classes. An example of the classifier is a neural network, a tree, a mathematical expression, or the like. For example, the classifier may be a person such as an expert.

In this regard, there is a case where a user desires to recognize how reliable a data classification result with the classifier is.

However, in the related art, it is difficult for the user to recognize how reliable a data classification result obtained with the classifier is. For example, when the classifier is a black box model obtained by deep learning, it is difficult for the user to recognize how reliable a data classification result obtained with the classifier is even when the user refers to parameters of the classifier.

For example, the classifier is referred to as a black box model in the case where it is difficult for a user to interpret the basis, mechanism, and so on according to which the classifier classifies data sets even when the user refers to the structure of the classifier including parameters and the like. For example, when the classifier is a neural network, the classifier tends to be a black box model. For example, even when the user refers to nodes, edges between the nodes, and parameters of the edges in the neural network serving as the classifier, it is difficult for the user to interpret the basis, mechanism, and so on according to which the neural network serving as the classifier classifies data sets.

To address this, a first method is conceivable which includes approximating a black box model for a certain data point with a model representing a behavior of the black box model, and outputting a contribution degree of a feature amount used in the approximate model. Although the behavior of the black box model is approximated in the first method, the first method has no way to indicate how reliable the behavior of the black box model is as a classifier. For this reason, with the first method, it may be difficult for the user to recognize the reason, the grounds, or the like that the classification result of data with the classifier is reliable. For example, for the first method, Reference Literatures 1 and 2 listed below and the like may be referred to.

Reference Literature 1: Ribeiro, Marco Tulio, Sameer Singh, and Carlos Guestrin, ""Why should I trust you?" Explaining the Predictions of Any Classifier", Proceedings of the 22nd ACM SIGKDD international conference on knowledge discovery and data mining, 2016.

Reference Literature 2: Lundberg, Scott M., and Su-In Lee., "A unified approach to interpreting model predictions", Proceedings of the 31st international conference on neural information processing systems, 2017.

A second method is conceivable which includes approximating a classifier with a model easily interpretable by a user. For example, the model is a tree, a rule list, or the like. According to the second method, the user refers to the approximate model and tries to recognize the reason, the grounds, or the like that a data classification result obtained with the classifier is reliable. In the second method, however, the approximate model might not represent the reason, the grounds, or the like that a data classification result obtained with the classifier is reliable in an accurate or easily-interpretable manner. For this reason, with the second method, it may be difficult for the user to recognize the reason, the grounds, or the like that a data classification result with the classifier is reliable. For example, for the second method, NPL 1 listed above or the like may be referred to.

Under these circumstances, an information processing method capable of outputting information that enables evaluation of the reliability of a data classification result with a classifier will be described in the present embodiment.

In FIG. 1, a classifier 110 classifies each of data sets 111 having each of multiple different attribute value patterns into any one of multiple classes. Each attribute value pattern is a pattern composed of a combination of one or more attribute values respectively concerning one or more attributes. An attribute value is a value concerning any attribute.

The attribute value pattern may be a pattern composed of a combination of one or more attribute value conditions for one or more attributes, respectively. Each condition specifies, for example, multiple values that may be taken as an attribute value. Each condition specifies, for example, a possible value range of an attribute value. For example, the attribute value pattern may be a pattern composed of a combination of one or more possible attribute value ranges respectively concerning one or more attributes.

For example, in the example in FIG. 1, an attribute value pattern is {early morning, residential area}, {midsummer, rainy}, {along road}, or the like. Here, early morning is an attribute value concerning a temporal attribute. Then, residential area and along road are attribute values concerning a locational attribute. For example, midsummer is an attribute value concerning a seasonal attribute. For example, rainy is an attribute value concerning a weather attribute. Each data set 111 represents, for example, a sound. The sound represents, for example, a call. For example, multiple classes include a class in which the sound is a pigeon call, a class in which the sound is a crow call, a class in which the sound is a sparrow call, and so on.

In a case of classifying each of data sets 111 having each of the multiple attribute value patterns with the classifier 110, the information processing apparatus 100 acquires an index value indicating how many data sets 111 have correct classification results. For example, the index value is a correct classification count indicating the number of data sets 111 with the correct classification results. For example, the index value may be an incorrect classification count indicating the number of data sets 111 having incorrect classification results.

For example, the index value may be a correct classification rate indicating a percentage of data sets 111 with correct classification results among data sets 111 having a certain attribute value pattern. For example, the index value may be an incorrect classification rate indicating a percentage of data sets 111 with incorrect classification results among data sets 111 having a certain attribute value pattern.

In the example in FIG. 1, the information processing apparatus 100 acquires a correct classification rate of 95% for data sets 111 having the attribute value pattern {early morning, residential area}, for example. In the example in FIG. 1, the information processing apparatus 100 acquires a correct classification rate of 40% for data sets 111 having the attribute value pattern {midsummer, rainy}, for example. In the example in FIG. 1, the information processing apparatus 100 acquires a correct classification rate of 40% for data sets 111 having the attribute value pattern {along road}, for example.

(1-2) The information processing apparatus 100 identifies each first attribute value pattern having a relatively small number of data sets 111 with correct classification results among the multiple attribute value patterns, based on the acquired index values. For example, the information processing apparatus 100 identifies, as the first attribute value pattern, an attribute value pattern having a correct classification rate equal to or lower than a threshold among the multiple attribute value patterns. For example, the threshold is 50%.

In the example in FIG. 1, the information processing apparatus 100 identifies the attribute value pattern {midsummer, rainy} having the correct classification rate of 50% or less as the first attribute value pattern, for example. In the example in FIG. 1, the information processing apparatus 100 identifies the attribute value pattern {along road} having the correct classification rate of 50% or less as the first attribute value pattern, for example. Thus, the information processing apparatus 100 is able to identify what attribute value pattern a data set 111 which is difficult to classify with the classifier 110 tends to have.

(1-3) In the case of classifying a target data set, the information processing the information processing apparatus 100 determines whether or not the first attribute value pattern matching the target data set exists among the identified first attribute value patterns. The information processing apparatus 100 outputs the determination result. For example, the output form is display on a display, print output to a printer, transmission to another computer, storage in a storage area, or the like. In the example in FIG. 1, the target data set has an attribute value pattern {midsummer, rainy}. For example, the information processing apparatus 100 determines that the first attribute value pattern {midsummer, rainy} matching the target data set exists.

In this way, the information processing apparatus 100 may make it easy for the user to recognize how reliable the classification result of a target data set with the classifier 110 is. The information processing apparatus 100 may enable the user to easily understand how reliable the classification result of the target data set with the classifier 110 is. For example, the information processing apparatus 100 may enable the user to recognize that the first attribute value pattern matching the target data set exists. For example, in consideration of the existence of the first attribute value pattern matching the target data set, the user may determine that the target data set is a data set difficult to correctly classify with the classifier 110.

Accordingly, for example, the user may determine that the reliability of the classification result of the target data set with the classifier 110 is relatively low in consideration of the existence of the first attribute value pattern matching the target data set. Even when the classifier 110 is a black box model, the user may relatively easily recognize how reliable the classification result of a target data set with the classifier 110 is.

Without recognizing the behavior itself of the classifier 110, the user may recognize the existence of the first attribute value pattern matching a target data set, as the grounds that the reliability of the classification result of the target data set is relatively low. Therefore, the user may understand the situation where the reliability of the classification result of the target data set is relatively low.

If the first attribute value pattern matching a target data set exists, the information processing apparatus 100 may output the first attribute value pattern matching the target data set. For example, the output form is display on a display, print output to a printer, transmission to another computer, storage in a storage area, or the like. For example, the information processing apparatus 100 outputs the first attribute value pattern {midsummer, rainy} matching the target data set.

In this way, the information processing apparatus 100 may make it much easier for the user to recognize how reliable the classification result of the target data set with the classifier 110 is. The information processing apparatus 100 may enable the user to easily understand how reliable the classification result of the target data set with the classifier 110 is. For example, the information processing apparatus 100 may enable the user to refer to the first attribute value pattern matching the target data set as the grounds for the situation where the reliability of the classification result of the target data set with the classifier 110 is relatively low.

Accordingly, in consideration of the first attribute value pattern matching the target data set, the user may determine that the reliability of the classification result of the target data set with the classifier 110 is relatively low. Even when the classifier 110 is a black box model, the user may relatively easily recognize how reliable the classification result of a target data set with the classifier 110 is.

Without recognizing the behavior itself of the classifier 110, the user may recognize the first attribute value pattern matching the target data set, as the grounds for the situation where the reliability of the classification result of the target data set is relatively low. Therefore, the user may understand the situation where the reliability of the classification result of the target data set is relatively low.

Although the case where the information processing apparatus 100 identifies the first attribute value pattern based on the index values is described herein, the information processing method is not limited to this. For example, there may be a case where the information processing apparatus 100 identifies each second attribute value pattern having a relatively large number of data sets 111 with correct classification results among the multiple attribute value patterns, based on the acquired index values. Thus, the information processing apparatus 100 may identify what attribute value pattern a data set 111 which is easy to classify with the classifier 110 tends to have.

In a case of classifying a target data set, the information processing apparatus 100 may determine whether or not the second attribute value pattern matching the target data set exists among the identified second attribute value patterns. The information processing apparatus 100 may output the determination result. For example, the output form is display on a display, print output to a printer, transmission to another computer, storage in a storage area, or the like. If the target data set has the attribute value pattern {early morning, residential area}, for example, the information processing apparatus 100 may determine that the second attribute value pattern {early morning, residential area} matching the target data set exists.

In this way, the information processing apparatus 100 may make it easy for the user to recognize how reliable the classification result of a target data set with the classifier 110 is. The information processing apparatus 100 may enable the user to easily understand how reliable the classification result of the target data set with the classifier 110 is. For example, the information processing apparatus 100 may enable the user to recognize that the second attribute value pattern matching the target data set exists. For example, in consideration of the existence of the second attribute value pattern matching the target data set, the user may determine that the target data set is a data set easy to correctly classify with the classifier 110.

For this reason, for example, in consideration of the existence of the second attribute value pattern matching the target data set, the user may determine that the reliability of the classification result of the target data set with the classifier 110 is relatively high. Even when the classifier 110 is a black box model, the user may relatively easily recognize how reliable the classification result of a target data set with the classifier 110 is.

Without recognizing the behavior itself of the classifier 110, the user may recognize the existence of the second attribute value pattern matching a target data set, as the grounds that the reliability of the classification result of a target data set is relatively low. For this reason, the user may understand the situation where the reliability of the classification result of the target data set is relatively high.

If the second attribute value pattern matching the target data set exists, the information processing apparatus 100 may output the second attribute value pattern matching the target data set. For example, the output form is display on a display, print output to a printer, transmission to another computer, storage in a storage area, or the like. For example, the information processing apparatus 100 outputs the second attribute value pattern {early morning, residential area} matching the target data set.

In this way, the information processing apparatus 100 may make it much easier for the user to recognize how reliable the classification result of the target data set with the classifier 110 is. The information processing apparatus 100 may enable the user to easily understand how reliable the classification result of the target data set with the classifier 110 is. For example, the information processing apparatus 100 may enable the user to refer to the second attribute value pattern matching the target data set as the grounds for the situation where the reliability of the classification result of the target data set with the classifier 110 is relatively high.

Accordingly, in consideration of the second attribute value pattern matching the target data set, the user may determine that the reliability of the classification result of the target data set with the classifier 110 is relatively high. Even when the classifier 110 is a black box model, the user may relatively easily recognize how reliable the classification result of a target data set with the classifier 110 is.

Without recognizing the behavior itself of the classifier 110, the user may recognize the second attribute value pattern matching the target data set, as the grounds that the reliability of the classification result of a target data set is relatively high. For this reason, the user may understand the situation where the reliability of the classification result of the target data set is relatively high.

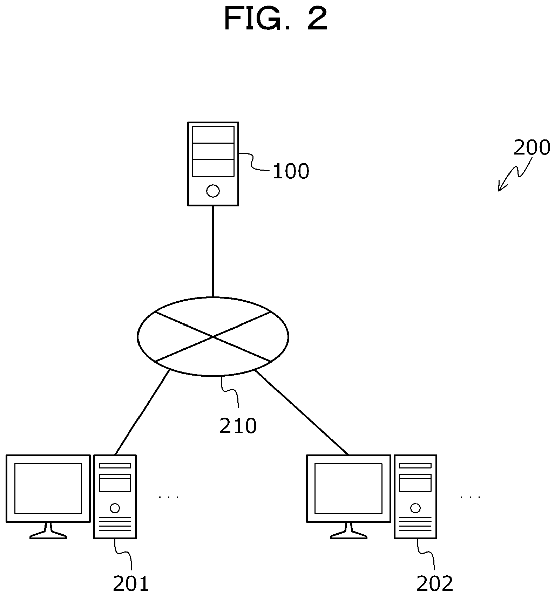

Although the case where the information processing apparatus 100 operates alone is described herein, the information processing method is not limited to this. For example, there may be a case where the information processing apparatus 100 collaborates with another computer. For example, the information processing apparatus 100 may receive a target data set from another computer. An example of a case where the information processing apparatus 100 collaborates with another computer will be described later with reference to FIG. 2, specifically.

### (Example of Reliability Evaluation System 200)

Next, an example of a reliability evaluation system 200 to which the information processing apparatus 100 illustrated in FIG. 1 is applied will be described with reference to FIG. 2.

FIG. 2 is an explanatory diagram illustrating an example of the reliability evaluation system 200. In FIG. 2, the reliability evaluation system 200 includes the information processing apparatus 100, an information accumulation apparatus 201, and a client apparatus 202.

In the reliability evaluation system 200, the information processing apparatus 100 and the information accumulation apparatus 201 are coupled to each other via a wired or wireless network 210. For example, the network 210 is a local area network (LAN), a wide area network (WAN), the Internet, or the like. In the reliability evaluation system 200, the information processing apparatus 100 and the client apparatus 202 are coupled to each other via the wired or wireless network 210.

The information processing apparatus 100 is a computer having a classifier of interest. For example, there is one classifier of interest. From the information accumulation apparatus 201, the information processing apparatus 100 collects multiple data sets to serve as samples classifiable with the classifier of interest. For example, it is preferable that each of the data sets have a different attribute value pattern. The information processing apparatus 100 classifies each of the collected multiple data sets into any one of multiple classes with the classifier of interest.

Based on the classification results of the respective data sets, the information processing apparatus 100 identifies each first attribute value pattern having a relatively small number of data sets with the correct classification results among the multiple attribute value patterns. Based on the classification results of the respective data sets, the information processing apparatus 100 identifies each second attribute value pattern having a relatively large number of data sets with the correct classification results among the multiple attribute value patterns.

For example, the information processing apparatus 100 receives a target data set from the client apparatus 202. The information processing apparatus 100 classifies the target data set into any one of the multiple classes with the classifier of interest. The information processing apparatus 100 determines whether or not the first attribute value pattern matching the target data set exists among the identified first attribute value patterns. The information processing apparatus 100 determines whether or not the second attribute value pattern matching the target data set exists among the identified second attribute value patterns.

Based on the determination results, the information processing apparatus 100 generates evaluation information that enables evaluation of the reliability of the classification result of the target data set. The information processing apparatus 100 transmits the classification result of the target data set and the generated evaluation information to the client apparatus 202 in association with each other. For example, the information processing apparatus 100 is a server, a PC, or the like.

The information accumulation apparatus 201 is a computer that transmits data sets to serve as samples to the information processing apparatus 100. For example, the information accumulation apparatus 201 generates a data set to serve as a sample based on a feature amount measured by a sensor, and transmits the data set to the information processing apparatus 100. For example, the information accumulation apparatus 201 is a PC, a tablet terminal, a smartphone, a wearable terminal, a sensor device, or the like. For example, the sensor device is a camera device, a recorder, or the like.

The client apparatus 202 is a computer used by a user. The client apparatus 202 transmits a target data set to the information processing apparatus 100. For example, the client apparatus 202 generates a target data set based on a feature amount measured by a sensor, and transmits the target data set to the information processing apparatus 100. For example, the client apparatus 202 receives the classification result and the evaluation information of the target data set from the information processing apparatus 100. The client apparatus 202 outputs the classification result and the evaluation information of the target data set so that the user may refer to them. The client apparatus 202 is, for example, a PC, a tablet terminal, a smartphone, a wearable terminal, or the like.

In this way, the reliability evaluation system 200 is capable of classifying a target data set with the classifier and implementing a reliability evaluation service of providing a user using the client apparatus 202 with the evaluation information that enables evaluation of the reliability of the classification result of the target data set.

A conceivable case of application of the reliability evaluation service is, for example, a medical field. In this case, for example, the data set may indicate vital signs of a patient. The class may indicate a disease that a patient has. Another conceivable case of application of the reliability evaluation service is, for example, sound analysis. In this case, for example, the data set may indicate a sound of a call. The class may indicate an animal matching a call.

Still another conceivable case of application of the reliability evaluation service is, for example, graphological analysis. In this case, for example, the data set may indicate handwriting. The class may indicate a type of characters to which the handwriting belongs. Still another conceivable case of application of the reliability evaluation service is, for example, weather forecast. In this case, for example, the data set may indicate an attribute value such as a barometric pressure or a wind speed. The class may indicate a weather.

Although the case where there is one classifier of interest is described herein, the information processing method is not limited to this. For example, there may be multiple classifiers of interest. In this case, for example, the information processing apparatus 100 may select a classifier suitable for a target data set from among the multiple classifiers, and classify the target data set into any one of the multiple classes with the selected classifier. For example, it is considered that the information processing apparatus 100 selects, as a classifier suitable for the target data set, a classifier with which it is determined that the first attribute value pattern does not exist and that the second attribute value pattern exists, from among the multiple classifiers. There may be a case where the information processing apparatus 100 just provides the selected classifier to the client apparatus 202, and does not classify the target data set in itself.

### (Hardware Configuration Example of Information Processing Apparatus 100)

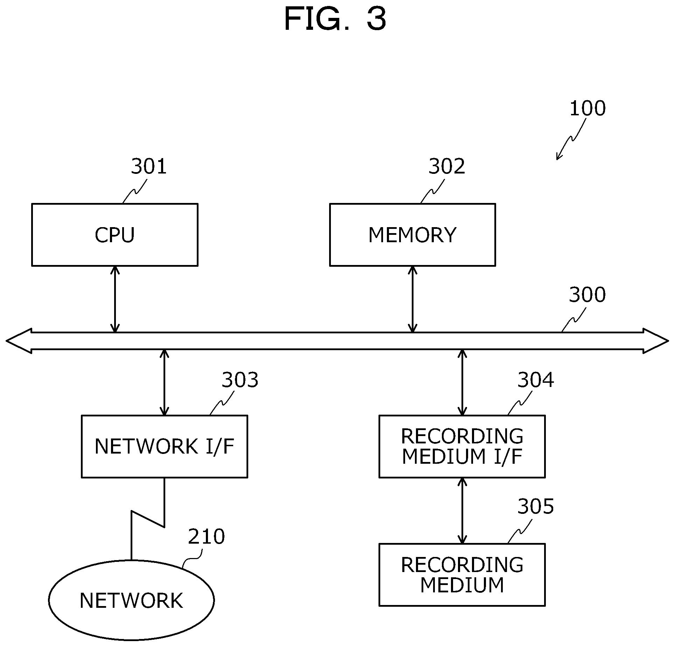

Next, a hardware configuration example of the information processing apparatus 100 will be described by using FIG. 3.

FIG. 3 is a block diagram illustrating a hardware configuration example of the information processing apparatus 100. In FIG. 3, the information processing apparatus 100 includes a central processing unit (CPU) 301, a memory 302, a network interface (I/F) 303, a recording medium I/F 304, and a recording medium 305. These components are coupled to each other via a bus 300.

The CPU 301 controls the entire information processing apparatus 100. The memory 302 includes, for example, a read-only memory (ROM), a random-access memory (RAM), a flash ROM, and the like. For example, the flash ROM or the ROM stores various programs, and the RAM is used as a work area of the CPU 301. The programs stored in the memory 302 are loaded by the CPU 301, and thus cause the CPU 301 to execute coded processing.

The network I/F 303 is coupled to the network 210 through a communication line, and is coupled to other computers via the network 210. The network I/F 303 serves as an interface between the network 210 and the inside of the information processing apparatus 100, and controls input and output of data from the other computers. The network I/F 303 is, for example, a modem, a LAN adapter, or the like.

The recording medium I/F 304 controls reading and writing of data from and to the recording medium 305 in accordance with control of the CPU 301. The recording medium I/F 304 is, for example, a disk drive, a solid-state drive (SSD), a Universal Serial Bus (USB) port, or the like. The recording medium 305 is a nonvolatile memory that stores data written under the control of the recording medium I/F 304. The recording medium 305 is, for example, a disk, a semiconductor memory, a USB memory, or the like. The recording medium 305 may be removably attached to the information processing apparatus 100.

In addition to the components described above, the information processing apparatus 100 may include, for example, a keyboard, a mouse, a display, a printer, a scanner, a microphone, a speaker, and the like. The information processing apparatus 100 may include multiple recording medium I/Fs 304 and recording media 305. The information processing apparatus 100 does not have to include the recording medium I/F 304 or the recording medium 305.

### (Hardware Configuration Example of Information Accumulation Apparatus 201)

For example, a hardware configuration example of the information accumulation apparatus 201 is substantially the same as the hardware configuration example of the information processing apparatus 100 illustrated in FIG. 3, and thus the description thereof is omitted.

### (Hardware Configuration Example of Client Apparatus 202)

For example, a hardware configuration example of the client apparatus 202 is substantially the same as the hardware configuration example of the information processing apparatus 100 illustrated in FIG. 3, and thus the description thereof is omitted.

### (Functional Configuration Example of Information Processing Apparatus 100)

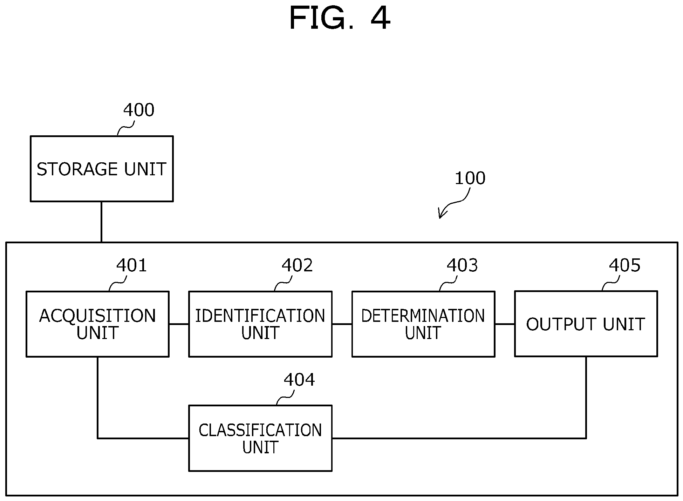

Next, a functional configuration example of the information processing apparatus 100 will be described with reference to FIG. 4.

FIG. 4 is a block diagram illustrating the functional configuration example of the information processing apparatus 100. The information processing apparatus 100 includes a storage unit 400, an acquisition unit 401, an identification unit 402, a determination unit 403, a classification unit 404, and an output unit 405.

The storage unit 400 is implemented by, for example, a storage area of the memory 302, the recording medium 305, or the like illustrated in FIG. 3. The following description will be given of a case where the storage unit 400 is included in the information processing apparatus 100, but the functional configuration is not limited to this. For example, there may be a case where the storage unit 400 is included in an apparatus different from the information processing apparatus 100 and information stored in the storage unit 400 may be referred to from the information processing apparatus 100.

The acquisition unit 401 to the output unit 405 function as an example of a control unit. For example, each of the acquisition unit 401 to the output unit 405 implements its function by causing the CPU 301 to execute a program stored in a storage area such as the memory 302 or the recording medium 305 illustrated in FIG. 3, or by using the network I/F 303. For example, a processing result of each functional unit is stored in a storage area such as the memory 302 or the recording medium 305 illustrated in FIG. 3.

The storage unit 400 stores various types of information to be referred to or updated in processing performed by each functional unit. The storage unit 400 stores a classifier. The classifier is, for example, a black box model. For example, the classifier is a neural network. The storage unit 400 may store multiple classifiers. For example, the storage unit 400 stores a structure of a classifier and parameters of the classifier.

The storage unit 400 stores multiple data sets to serve as samples. Each of the multiple data sets to serve as the samples is for use as a classification target by the classifier. Each of the multiple data sets to serve as the samples has an attribute value pattern. Each attribute value pattern is a pattern composed of a combination of one or more attribute values respectively concerning one or more attributes. An attribute value is a value concerning any attribute.

The attribute value pattern may be a pattern composed of a combination of one or more attribute value conditions for one or more attributes, respectively. Each condition specifies, for example, multiple values that may be taken as an attribute value. Each condition specifies, for example, a possible value range of an attribute value. For example, the attribute value pattern may be a pattern composed of a combination of one or more possible attribute value ranges respectively concerning one or more attributes. For example, the multiple data sets to serve as the samples are acquired by the acquisition unit 401 and stored in the storage unit 400. The multiple data sets to serve as the samples may be stored in advance in the storage unit 400, for example.

The storage unit 400 stores a target data set. The target data set is for use as a classification target by the classifier. The target data set has an attribute value pattern. For example, the target data set is acquired by the acquisition unit 401 and stored in the storage unit 400. The storage unit 400 stores multiple attribute value patterns different from each other. For example, the attribute value patterns are acquired by the acquisition unit 401 and stored in the storage unit 400. For example, the attribute value patterns may be stored in advance in the storage unit 400.

The storage unit 400 stores an index value indicating how many data sets have correct classification results in the case of classifying data sets for each attribute value pattern with the classifier. For example, the index value is a correct classification count indicating the number of data sets with the correct classification results. For example, the index value may be an incorrect classification count indicating the number of data sets with the incorrect classification results.

For example, the index value may be a correct classification rate indicating a percentage of data sets with the correct classification results among data sets having a certain attribute value pattern. For example, the index value may be an incorrect classification rate indicating a percentage of data sets with the incorrect classification results among data sets having a certain attribute value pattern. For example, the index value is acquired by the acquisition unit 401 and stored in the storage unit 400. For example, the index value may be stored in advance in the storage unit 400.

The storage unit 400 may store an index value indicating how many data sets have correct classification results with each of the classifiers in the case of classification of data sets for each of multiple attribute value patterns with the classifier. For example, the index value is acquired by the acquisition unit 401 and stored in the storage unit 400. For example, the index value may be stored in advance in the storage unit 400.

The acquisition unit 401 acquires various types of information for use in processing performed by each functional unit. The acquisition unit 401 stores the acquired various types of information in the storage unit 400, or outputs the acquired various types of information to each functional unit. The acquisition unit 401 may output the various types of information stored in the storage unit 400 to each functional unit. For example, the acquisition unit 401 acquires the various types of information, based on an operation input of a user. For example, the acquisition unit 401 may receive the various types of information from an apparatus different from the information processing apparatus 100.

The acquisition unit 401 acquires the classifier. For example, the acquisition unit 401 acquires the classifier by receiving an input of the classifier based on an operation input of the user. For example, the acquisition unit 401 may acquire the classifier by receiving the classifier from another computer. The acquisition unit 401 may acquire multiple classifiers.

The acquisition unit 401 acquires multiple data sets to serve as samples. For example, the acquisition unit 401 acquires multiple data sets to serve as samples by receiving an input of the multiple data sets to serve as the samples based on an operation input of the user. For example, the acquisition unit 401 may acquire multiple data sets to serve as samples by receiving the multiple data sets from another computer. The acquisition unit 401 may acquire multiple data sets to serve as samples classifiable by each of the classifiers.

The acquisition unit 401 acquires multiple attribute value patterns. For example, the acquisition unit 401 acquires multiple attribute value patterns by identifying the multiple attribute value patterns based on the acquired multiple data sets. For example, the acquisition unit 401 may acquire multiple attribute value patterns by receiving an input of the multiple attribute value patterns based on an operation input of the user.

The acquisition unit 401 acquires an index value indicating how many data sets have correct classification results in the case of classifying data sets for each attribute value pattern with the classifier. For example, based on an operation input of the user, the acquisition unit 401 acquires the index value indicating how many data sets have correct classification results in the case of classifying data sets for each attribute value pattern with the classifier. For example, the acquisition unit 401 may acquire the index value indicating how many data sets have correct classification results in the case of classifying data sets for each attribute value pattern with the classifier, for example, based on a result of actually classifying the acquired multiple data sets with the classifier.

The acquisition unit 401 may acquire the index value in the case of classifying data sets for each of multiple attribute value patterns with each of the classifiers, the index value indicating how many data sets have correct classification results with the classifier. For example, the acquisition unit 401 acquires the index value indicating how many data sets have the correct classification results in the case of classifying data sets for each attribute value pattern with each of the classifiers, by receiving an input of the index value based on an operation input of the user. For example, using each of the classifiers, the acquisition unit 401 may actually classify multiple data sets to serve as samples acquired for the classifier. For example, based on the classification result, the acquisition unit 401 calculates and acquires the index value indicating how many data sets have the correct classification results in the case of classifying data sets for each attribute value pattern with each of the classifiers.

The acquisition unit 401 acquires a target data set. For example, the acquisition unit 401 acquires the target data set by receiving an input of the target data set based on an operation input of the user. For example, the acquisition unit 401 may acquire the target data set by receiving the target data set from another computer.

The acquisition unit 401 may receive a start trigger for starting processing of any functional unit. The start trigger is, for example, an input of a predetermined operation by the user. For example, the start trigger may be a reception of predetermined information from another computer. For example, the start trigger may be an output of predetermined information by any functional unit. The acquisition unit 401 receives the acquisition of the index value as a start trigger for starting processing of the identification unit 402. For example, the acquisition unit 401 receives the acquisition of the target data set as a start trigger for starting processing of the determination unit 403 and the classification unit 404.

Based on the acquired index values, the identification unit 402 identifies each first attribute value pattern having a relatively small number of data sets with the correct classification results among the multiple attribute value patterns. For example, the identification unit 402 identifies, as the first attribute value pattern, an attribute value pattern having a correct classification rate equal to or lower than a threshold among the multiple attribute value patterns based on the correct classification rates acquired as the index values. For example, the threshold is 80%. For example, the threshold is set in advance. Thus, the identification unit 402 may identify what attribute value pattern a data set difficult to classify with the classifier tends to have.

For example, the identification unit 402 may identify, as the first attribute value pattern, an attribute value pattern having a correct classification count equal to or smaller than a threshold among the multiple attribute value patterns, based on the correct classification counts acquired as the index values. For example, the threshold is a fixed value. For example, the threshold may be a variable value. For example, the threshold is 20. For example, the threshold may be a number corresponding to a certain percentage in the number of data sets to serve as samples. For example, the threshold is set in advance. Thus, the identification unit 402 may identify what attribute value pattern a data set difficult to classify with the classifier tends to have.

For example, the identification unit 402 may identify the first attribute value pattern based on the correct classification rates and the correct classification counts acquired as the index values. For example, the identification unit 402 may identify, as the first attribute value pattern, an attribute value pattern having a correct classification rate equal to or lower than a first threshold and a correct classification count equal to or smaller than a second threshold among the multiple attribute value patterns. For example, the identification unit 402 may identify, as the first attribute value pattern, an attribute value pattern having a correct classification rate equal to or lower than the first threshold or the correct classification count is equal to or smaller than the second threshold. Thus, the identification unit 402 may identify what attribute value pattern a data set difficult to classify with the classifier tends to have.

For example, the identification unit 402 may identify, as the first attribute value pattern, an attribute value pattern having an incorrect classification rate equal to or higher than a threshold among the multiple attribute value patterns, based on the incorrect classification rates acquired as the index values. For example, the threshold is 20%. For example, the threshold is set in advance. Thus, the identification unit 402 may identify what attribute value pattern a data set difficult to classify with the classifier tends to have.

For example, the identification unit 402 may identify, as the first attribute value pattern, an attribute value pattern having an incorrect classification count equal to or greater than a threshold among the multiple attribute value patterns, based on the incorrect classification counts acquired as the index values. For example, the threshold is a fixed value. For example, the threshold may be a variable value. For example, the threshold is 10. For example, the threshold may be a number corresponding to a certain percentage in the number of data sets to serve as samples. For example, the threshold is set in advance. Thus, the identification unit 402 may identify what attribute value pattern a data set difficult to classify with the classifier tends to have.

For example, for each classifier, the identification unit 402 may identify a first attribute value pattern having a relatively small number of data sets with correct classification results with the classifier among the multiple attribute value patterns, based on the acquired index values. Thus, the identification unit 402 may identify what attribute value pattern a data set difficult to classify with each classifier tends to have.

Based on the acquired index values, the identification unit 402 identifies a second attribute value pattern having a relatively large number of data sets with correct classification results among the multiple attribute value patterns. For example, the identification unit 402 identifies, as the second attribute value pattern, an attribute value pattern having a correct classification rate equal to or higher than a threshold among the multiple attribute value patterns based on the correct classification rates acquired as the index values. For example, the threshold is 90%. For example, the threshold is set in advance. Thus, the identification unit 402 may identify what attribute value pattern a data set easy to classify with the classifier tends to have.

For example, the identification unit 402 may identify, as the second attribute value pattern, an attribute value pattern having a correct classification count equal to or greater than a threshold among the multiple attribute value patterns, based on the correct classification counts acquired as the index values. For example, the threshold is a fixed value. For example, the threshold may be a variable value. For example, the threshold is 50. For example, the threshold may be a number corresponding to a certain percentage in the number of data sets to serve as samples. For example, the threshold is set in advance. Thus, the identification unit 402 may identify what attribute value pattern a data set easy to classify with the classifier tends to have.

For example, the identification unit 402 may identify the second attribute value pattern based on the correct classification rates and the correct classification counts acquired as the index values. For example, the identification unit 402 may identify, as the second attribute value pattern, an attribute value pattern having a correct classification rate equal to or higher than a third threshold and a correct classification count equal to or greater than a fourth threshold among the multiple attribute value patterns. For example, the identification unit 402 may identify, as the second attribute value pattern, an attribute value pattern having a correct classification rate equal to or higher than the third threshold or a correct classification count equal to or greater than the fourth threshold. Thus, the identification unit 402 may identify what attribute value pattern a data set easy to classify with the classifier tends to have.

For example, the identification unit 402 may identify, as the second attribute value pattern, an attribute value pattern having an incorrect classification rate equal to or lower than a threshold among the multiple attribute value patterns based on the incorrect classification rates acquired as the index values. For example, the threshold is 10%. For example, the threshold is set in advance. Thus, the identification unit 402 may identify what attribute value pattern a data set easy to classify with the classifier tends to have.

For example, the identification unit 402 may identify, as the second attribute value pattern, an attribute value pattern having an incorrect classification count equal to or smaller than a threshold among the multiple attribute value patterns, based on the incorrect classification counts acquired as the index values. For example, the threshold is a fixed value. For example, the threshold may be a variable value. For example, the threshold is 10. For example, the threshold may be a number corresponding to a certain percentage in the number of data sets to serve as samples. For example, the threshold is set in advance. Thus, the identification unit 402 may identify what attribute value pattern a data set easy to classify with the classifier tends to have.

For example, for each classifier, the identification unit 402 may identify a second attribute value pattern having a relatively large number of data sets with correct classification results with the classifier among the multiple attribute value patterns, based on the acquired index values. Thus, the identification unit 402 may identify what attribute value pattern a data set easy to classify with the classifier tends to have.

The determination unit 403 determines whether or not the first attribute value pattern matching the target data set exists among first attribute value patterns identified for a certain classifier. Accordingly, the determination unit 403 may determine that the target data set is a data set difficult to correctly classify with the classifier.

The determination unit 403 determines whether or not the second attribute value pattern matching the target data set exists among second attribute value patterns identified for a certain classifier. Accordingly, the determination unit 403 may determine that the target data set is a data set easy to correctly classify with the classifier.

The determination unit 403 may generate evaluation information that enables evaluation of the reliability of a classification result of a target data set. For example, when the first attribute value pattern matching a target data set does not exist and the second attribute value pattern matching the target data set exists for a certain classifier, the determination unit 403 generates first information as the evaluation information. For example, the first information is information indicating that the classification result of the target data set with the classifier is affirmed. For example, the first information includes a message indicating that it is determined that the classification result of the target data set with the classifier has a relatively high probability of being reliable. Accordingly, the determination unit 403 may enable the reliability of a classification result of a target data set to be evaluated from the outside.

For example, when the first attribute value pattern matching a target data set exists for a certain classifier, the determination unit 403 generates second information as the evaluation information. For example, the second information is information indicating that the classification result of the target data set with the classifier is denied. For example, the second information includes a message indicating that it is determined that the classification result of the target data set with the classifier has a relatively low probability of being reliable. Accordingly, the determination unit 403 may enable the reliability of a classification result of a target data set to be evaluated from the outside.

Among the multiple classifiers, the determination unit 403 may select a classifier suitable for a target data set. The classifier suitable for the target data set is, for example, a classifier that is determined to be capable of accurately classifying the target data set. For example, the determination unit 403 selects a classifier with which the first attribute value pattern matching the target data set does not exist among the multiple classifiers.

For example, the determination unit 403 may select a classifier with which the second attribute value pattern matching the target data set exists among the multiple classifiers. For example, the determination unit 403 may select a classifier with which the first attribute value pattern matching the target data set does not exist and the second attribute value pattern matching the target data set exists among the multiple classifiers. Accordingly, the determination unit 403 may selectively use a classifier suitable for a target data set from among the multiple classifiers.

Based on the first attribute value patterns matching a target data set and the second attribute value patterns matching the target data set, the determination unit 403 may evaluate the likelihood of the classification result of the target data set with the classifier. For example, as an index value indicating the likelihood of the classification result of the target data set with the classifier, the determination unit 403 calculates an evaluation value having a larger value as the number of the first attribute value patterns matching the target data set decreases or as the number of the second attribute value patterns matching the target data set increases.

Based on the first attribute value patterns matching the target data set and the second attribute value patterns matching the target data set, the determination unit 403 may evaluate the likelihood of the classification result of the target data set with each classifier. Accordingly, the determination unit 403 may enable the reliability of a classification result of a target data set to be evaluated from the outside.

The classification unit 404 classifies a target data set with the classifier. The classification unit 404 classifies a target data set into any one of multiple classes with the classifier. The classification unit 404 may classify a target data set by using the classifier selected from among the multiple classifiers. Accordingly, the classification unit 404 may make a classification result of a target data set available.

The output unit 405 outputs the processing result of at least any of the functional units. For example, the output form is display on a display, print output to a printer, transmission to an external apparatus through the network I/F 303, or storage in a storage area such as the memory 302 or the recording medium 305. Thus, the output unit 405 may notify the user of the processing result of at least any of the functional units, thereby improving the convenience of the information processing apparatus 100.

The output unit 405 outputs the evaluation information. For example, the output unit 405 outputs the first information indicating that a classification result of a target data set with the classifier is affirmed. For example, the output unit 405 outputs the first information in association with the classification result of the target data set so that the user may refer to them. In this way, the output unit 405 may enable the reliability of a classification result of a target data set to be evaluated from the outside.

For example, the output unit 405 outputs the second information indicating that a classification result of a target data set with the classifier is denied. For example, the output unit 405 outputs the second information in association with the classification result of the target data set so that the user may refer to them. In this way, the output unit 405 may enable the reliability of a classification result of a target data set to be evaluated from the outside.

When the first attribute value pattern matching a target data set exists among the identified first attribute value patterns, the output unit 405 outputs the first attribute value pattern matching the target data set. For example, the output unit 405 outputs the first attribute value pattern in association with the classification result of the target data set so that the user may refer to them. In this way, the output unit 405 may enable the reliability of a classification result of a target data set to be evaluated from the outside.

When the second attribute value pattern matching a target data set exists among the identified second attribute value patterns, the output unit 405 outputs the second attribute value pattern matching the target data set. For example, the output unit 405 outputs the second attribute value pattern in association with the classification result of the target data set so that the user may refer to them. In this way, the output unit 405 may enable the reliability of a classification result of a target data set to be evaluated from the outside.

The output unit 405 outputs any one of multiple classifiers. For example, the output unit 405 outputs the selected classifier so that the user may refer to the selected classifier. As a result, the output unit 405 may enable the classifier suitable for a target data set to be used from the outside. Therefore, the output unit 405 may enable a target data set to be correctly classified easily from the outside.

Although the case where the information processing apparatus 100 includes the classification unit 404 is described herein, the information processing apparatus 100 is not limited to this case. For example, there may be a case where the information processing apparatus 100 does not include the classification unit 404. In this case, for example, the output unit 405 may output the first attribute value pattern matching a target data set or the second attribute value pattern matching the target data set without association with the classification result of the target data set so that the user may refer to the output attribute value pattern. Accordingly, the output unit 405 may enable the reliability of a classification result of a target data set with a classifier to be predicted from the outside before classification with the classifier.

### (Operation Example of Information Processing Apparatus 100)

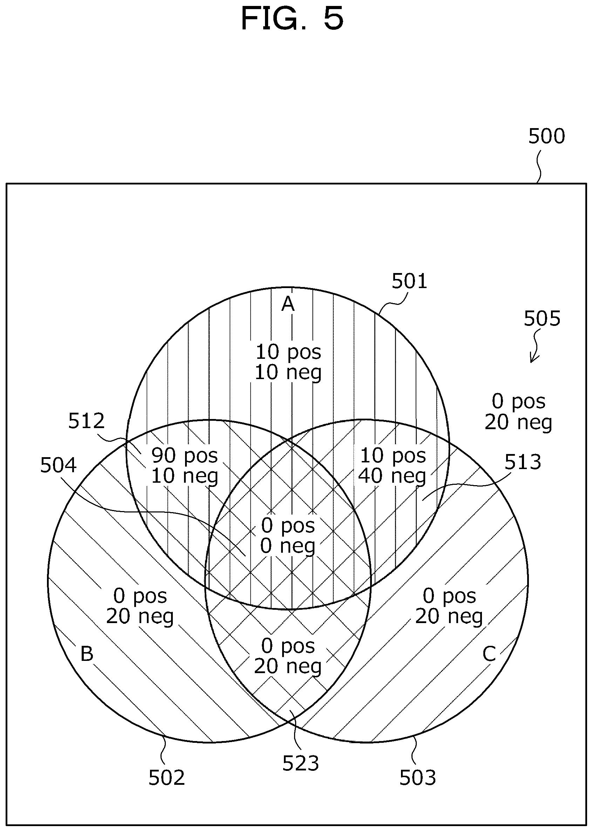

Next, an operation example of the information processing apparatus 100 will be described with reference to FIGs. 5 to 11. First, with reference to FIG. 5, an example of multiple data sets to serve as samples will be described on the assumption that the information processing apparatus 100 acquires the multiple data sets to serve as the samples.

FIG. 5 is an explanatory diagram illustrating an example of the multiple data sets to serve as the samples. A Venn diagram 500 in FIG. 5 illustrates a relationship among multiple condition sets. The information processing apparatus 100 acquires data sets to serve as samples for at least any of the condition sets.

For example, a condition set 501 is specified as ({A, ¬B, ¬C}). Here, ¬ is a sign of negation and indicates that the condition is false. The information processing apparatus 100 acquires 20 data sets for ({A, ¬B, ¬C}). Among them, 10 data sets for ({A, ¬B, ¬C}) are data sets whose correct class is pos. On the other hand, the remaining 10 data sets for ({A, ¬B, ¬C}) are data sets whose correct class is neg.

For example, a condition set 502 is specified as ({->A, B, ¬C}). For example, the information processing apparatus 100 acquires 20 data sets for ({¬A, B, ¬C}). These 20 data sets for ({-.A, B, ¬C}) are data sets whose correct class is neg. On the other hand, the data sets for ({¬A, B, ¬C}) include any data set whose correct class is pos.

For example, a condition set 503 is specified as ({¬A, ¬B, C}). For example, the information processing apparatus 100 acquires 20 data sets for ({¬A, ¬B, C}). These 20 data sets for ({¬A, ¬B, C}) are data sets whose correct class is neg. On the other hand, the data sets for ({¬A, ¬B, C}) include any data set whose correct class is pos.

For example, a condition set 512 is specified as ({A, B, ¬C}). For example, the information processing apparatus 100 acquires 100 data sets for ({A, B, ¬C}). Among them, 90 data sets for ({A, B, ¬C}) are data sets whose correct class is pos. On the other hand, the remaining 10 data sets for ({A, B, ¬C}) are data sets whose correct class is neg.

For example, a condition set 523 is specified as ({->A, B, C}). For example, the information processing apparatus 100 acquires 20 data sets for ({¬A, B, C}). These 20 data sets for ({¬A, B, C}) are data sets whose correct class is neg. On the other hand, the data sets for ({¬A, B, C}) include any data set whose correct class is pos.

For example, a condition set 513 is specified as ({A, ¬B, C}). For example, the information processing apparatus 100 acquires 50 data sets for ({A, ¬B, C}). Among them, 10 data sets for ({A, ¬B, C}) are data sets whose correct class is pos. On the other hand, the remaining 40 data sets for ({A, ¬B, C}) are data sets whose correct class is neg.

For example, a condition set 504 is specified as ({A, B, C}). The information processing apparatus 100 does not acquire any data set for ({A, B, C}).

For example, a condition set 505 is specified as ({¬A, ¬B, ¬C}). For example, the information processing apparatus 100 acquires 20 data sets for ({¬A, ¬B, ¬C}). These 20 data sets for ({-.A, ¬B, ¬C}) are data sets whose correct class is neg. On the other hand, the data sets for ({¬A, ¬B, -,C}) include any data set whose correct class is pos.

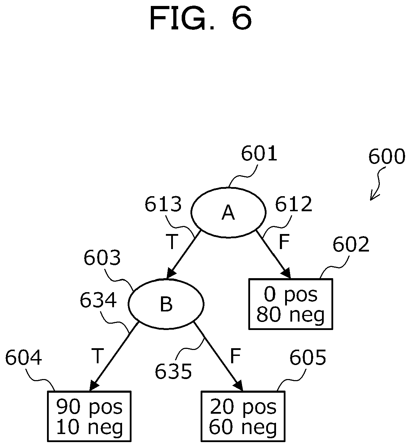

Next, an example of the classifier included in the information processing apparatus 100 will be described with reference to FIG. 6.

FIG. 6 is an explanatory diagram illustrating an example of the classifier. In the example in FIG. 6, the classifier is a tree 600 for simplification of description. The tree 600 includes a node 601 provided for a condition A for attribute values concerning a first attribute. The node 601 is coupled to a class 602 with an edge 612. The edge 612 is provided for a case where the condition A is false.

The node 601 is coupled to a node 603 with an edge 613, the node 603 provided for a condition B for attribute values concerning a second attribute. The edge 613 is provided for a case where the condition A is true. The node 603 is coupled to a class 604 with an edge 634. The edge 634 is provided for a case where the condition B is true. The node 603 is coupled to a class 605 with an edge 635. The edge 635 is provided for a case where the condition B is false.

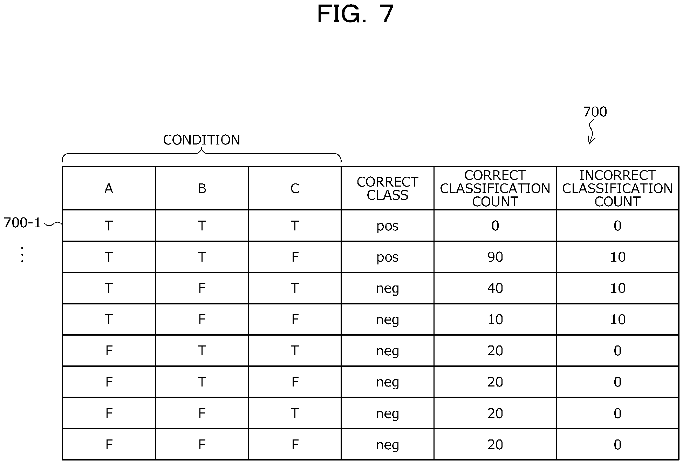

Next, with reference to FIG. 7, description will be given of an example in which the information processing apparatus 100 classifies acquired multiple data sets to serve as samples by using a classifier and calculates the correct classification count and the incorrect classification count for each attribute value pattern.

FIG. 7 is an explanatory diagram illustrating an example of calculating the correct classification count and the incorrect classification count for each attribute value pattern. In FIG. 7, the information processing apparatus 100 identifies attribute value patterns. The information processing apparatus 100 identifies an attribute value pattern specified as each subset included in a condition set. A subset may be an entire condition set.

For example, the information processing apparatus 100 identifies an attribute value pattern specified as a subset ({A}), an attribute value pattern specified as a subset ({B}), and an attribute value pattern specified as a subset ({C}). For example, the information processing apparatus 100 identifies an attribute value pattern specified as a subset ({A, B}), an attribute value pattern specified as a subset ({B, C}), and an attribute value pattern specified as a subset ({A, C}). For example, the information processing apparatus 100 identifies an attribute value pattern specified as a subset ({A, B, C}).

For example, the information processing apparatus 100 identifies an attribute value pattern specified as a subset ({¬A, B, C}), an attribute value pattern specified as a subset ({A, ¬B, C}), and an attribute value pattern specified as a subset ({A, B, ¬C}). For example, the information processing apparatus 100 identifies an attribute value pattern specified as a subset ({A, ¬B, -,C}), an attribute value pattern specified as a subset ({¬A, B, ¬C}), and an attribute value pattern specified as a subset ({¬A, ¬B, C}). For example, the information processing apparatus 100 identifies an attribute value pattern specified as a subset ({-.A, ¬B, ¬C}).

By using the classifier, the information processing apparatus 100 classifies each of the acquired multiple data sets to serve as the samples into the pos or neg class. The information processing apparatus 100 determines whether or not a classification result of each of the multiple data sets to serve as the samples is correct.

For each attribute value pattern, the information processing apparatus 100 calculates the number of data sets having the attribute value pattern and having the correct classification results, as the correct classification count based on the determination results. For each attribute value pattern, the information processing apparatus 100 calculates the number of data sets having the attribute value pattern and having the incorrect classification results, as the incorrect classification count based on the determination results.

The information processing apparatus 100 stores each attribute value pattern, the correct class of the classification results of the data sets having the attribute value pattern, and the correct classification count and the incorrect classification count calculated for the attribute value pattern in a summation information management table 700. For example, the summation information management table 700 is built by a storage area such as the memory 302 or the recording medium 305 of the information processing apparatus 100 illustrated in FIG. 3.

As illustrated in FIG. 7, the summation information management table 700 has fields of condition determinations, a correct class, a correct classification count, and an incorrect classification count. The summation information management table 700 stores summation information as a record 700-a by setting information in each field for each attribute value pattern. Here, a is an arbitrary integer.

Results of the condition determinations as elements forming each attribute value pattern are set in the respective condition determination fields. The condition determination fields include, for example, A, B, and C fields. In the A field, flag information is set which indicates whether the condition A as one of the elements forming the attribute value pattern is true or false. In the B field, flag information is set which indicates whether the condition B as one of the elements forming the attribute value pattern is true or false. In the C field, flag information is set which indicates whether the condition C as one of the elements forming the attribute value pattern is true or false.

In the correct class field, a correct class of the classification results of data sets having the above attribute value pattern is set. In the correct classification count field, a correct classification count is set which indicates the number of data sets whose classification results are the above correct class among the data sets having the above attribute value pattern. In the incorrect classification count field, an incorrect classification count is set which indicates the number of data sets whose classification results are not the above correct class among the data sets having the above attribute value pattern.

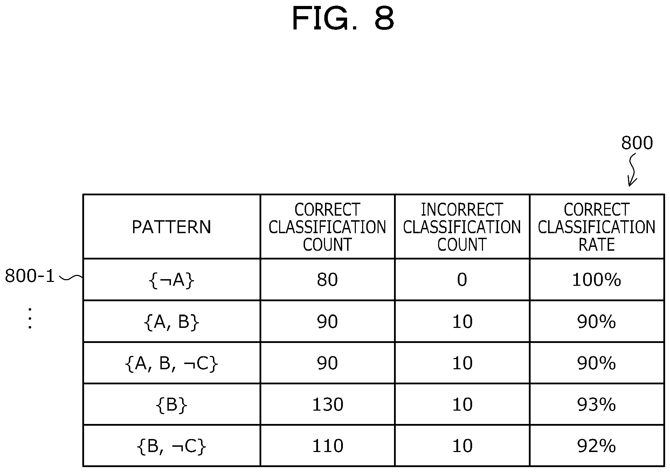

Next, with reference to FIG. 8, description will be given of an example in which the information processing apparatus 100 refers to the summation information management table 700 and identifies each attribute value pattern having a relatively large number of data sets with the correct classification results as a positive pattern.

FIG. 8 is an explanatory diagram illustrating an example of identifying an attribute value pattern having a relatively large number of data sets with the correct classification results. In FIG. 8, for each attribute value pattern, the information processing apparatus 100 calculates a correct classification rate indicating a percentage of data sets with the correct classification results among the data sets having the attribute value pattern.

For each attribute value pattern, the information processing apparatus 100 determines whether or not the calculated correct classification count is equal to or greater than a threshold = 50. For each attribute value pattern, the information processing apparatus 100 determines whether or not the calculated correct classification rate is equal to or higher than a threshold = 90%. The information processing apparatus 100 identifies, as a positive pattern, an attribute value pattern determined as having the correct classification count equal to or greater than the threshold = 50 and the correct classification rate equal to or higher than the threshold = 90%.

The information processing apparatus 100 stores the identified positive pattern, the correct classification count, the incorrect classification count, and the correct classification rate in a positive pattern management table 800 in association with each other. The positive pattern management table 800 is built by a storage area such as the memory 302 or the recording medium 305 of the information processing apparatus 100 illustrated in FIG. 3, for example.

As illustrated in FIG. 8, the positive pattern management table 800 has fields of a pattern, a correct classification count, an incorrect classification count, and a correct classification rate. The positive pattern management table 800 stores positive pattern information as a record 800-b by setting information in each field for each positive pattern. Here, b is an arbitrary integer.

A positive pattern is set in the pattern field. The correct classification count calculated for the above positive pattern is set in the correct classification count field. The incorrect classification count calculated for the above positive pattern is set in the incorrect classification count field. The correct classification rate calculated for the above positive pattern is set in the correct classification rate field.

Thus, the information processing apparatus 100 may identify what attribute value pattern a data set easy to classify with the classifier tends to have. For example, the information processing apparatus 100 may identify what attribute value pattern of a data set the classifier is good at classifying. For example, the information processing apparatus 100 may identify what attribute value pattern of a data set the classifier is suitable for classifying.

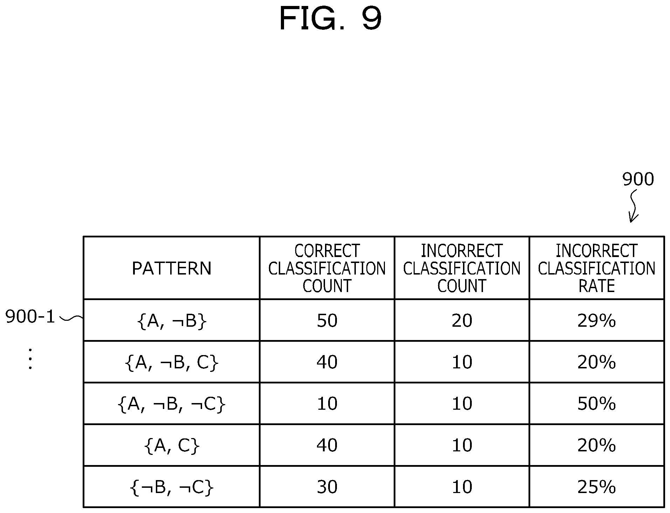

Next, with reference to FIG. 9, description will be given of an example in which the information processing apparatus 100 refers to the summation information management table 700 and identifies, as a negative pattern, each attribute value pattern having a relatively small number of data sets with the correct classification results.

FIG. 9 is an explanatory diagram illustrating an example of identifying each attribute value pattern having a relatively small number of data sets with the correct classification results. In FIG. 9, for each attribute value pattern, the information processing apparatus 100 calculates an incorrect classification rate indicating a percentage of data sets with incorrect classification results among data sets having each attribute value pattern.

For each attribute value pattern, the information processing apparatus 100 determines whether or not the calculated incorrect classification rate is equal to or higher than a threshold = 20%. The information processing apparatus 100 identifies an attribute value pattern whose incorrect classification rate is determined to be equal to or higher than the threshold = 20% as a negative pattern.

The information processing apparatus 100 stores the identified negative pattern, the correct classification count, the incorrect classification count, and the incorrect classification rate in a negative pattern management table 900 in association with each other. The negative pattern management table 900 is built by a storage area such as the memory 302 or the recording medium 305 of the information processing apparatus 100 illustrated in FIG. 3, for example.

As illustrated in FIG. 9, the negative pattern management table 900 has fields of a pattern, a correct classification count, an incorrect classification count, and an incorrect classification rate. The negative pattern management table 900 stores negative pattern information as a record 900-c by setting information in each field for each negative pattern. Here, c is an arbitrary integer.

A negative pattern is set in the pattern field. The correct classification count calculated for the above negative pattern is set in the correct classification count field. The incorrect classification count calculated for the above negative pattern is set in the incorrect classification count field. The incorrect classification rate calculated for the above negative pattern is set in the incorrect classification rate field.

Thus, the information processing apparatus 100 may identify what attribute value pattern a data set difficult to classify with the classifier tends to have. For example, the information processing apparatus 100 may identify what attribute value pattern of a data set the classifier is poor at classifying. The information processing apparatus 100 may identify what attribute value pattern of a data set the classifier is unsuitable for classifying.

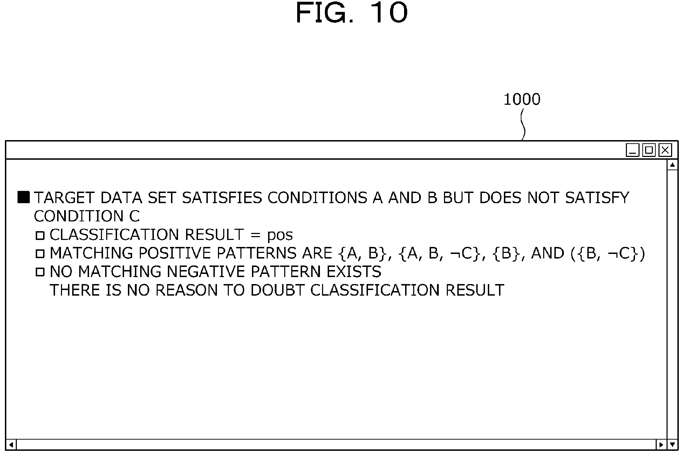

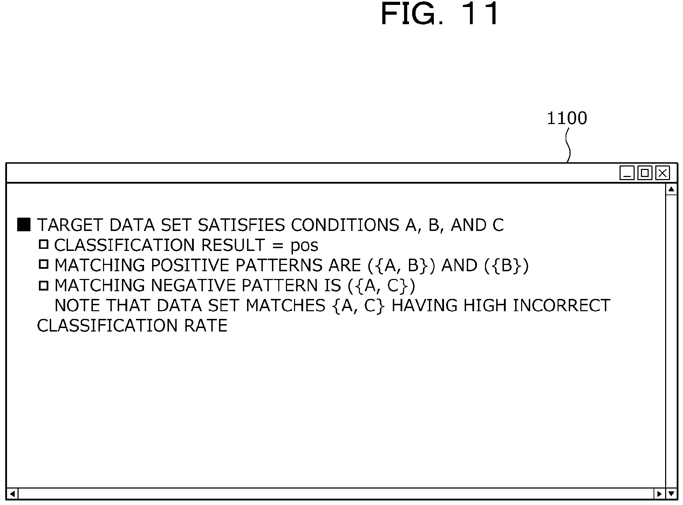

Next, with reference to FIGs. 10 and 11, description will be given of an example in which the information processing apparatus 100 classifies a target data set into any one of multiple classes with the classifier and evaluates the reliability of a classification result of the target data set.

FIGs. 10 and 11 are explanatory diagrams illustrating an example of evaluating the reliability of a classification result of a target data set. In FIG. 10, the information processing apparatus 100 receives a target data set. For example, in the example in FIG. 10, the target data set is a data set having an attribute value pattern specified as ({A, B, ¬C}). Using the classifier, the information processing apparatus 100 classifies the target data set into any one of the multiple classes.

By referring to the positive pattern management table 800, the information processing apparatus 100 determines whether or not there is a positive pattern matching the target data set. In the example in FIG. 10, the information processing apparatus 100 determines that there are a positive pattern ({A, B}), a positive pattern ({A, B, ¬C}), a positive pattern ({B}), and a positive pattern ({B, ¬C}). By referring to the negative pattern management table 900, the information processing apparatus 100 determines whether or not there is a negative pattern matching the target data set. In the example in FIG. 10, the information processing apparatus 100 determines that there is no negative pattern.

Accordingly, the information processing apparatus 100 may identify whether the classifier is good or poor at classifying the target data set, and provide the determination result as a guideline for evaluating the reliability of the classification result of the target data set. If there is a positive pattern, the information processing apparatus 100 may judge that the classifier is good at classifying the target data set and rate the reliability of the classification result of the target data set as relatively high. If there is no negative pattern, the information processing apparatus 100 may judge that the classifier is good at classifying the target data set and rate the reliability of the classification result of the target data set as relatively high.

If there is a positive pattern and there is no negative pattern, the information processing apparatus 100 positively evaluates the classification result of the target data set. For example, "positively evaluate" means to rate the reliability of the classification result of the target data set as relatively high. The information processing apparatus 100 generates a message indicating that the classification result of the target data set is positively evaluated. For example, the message is "there is no reason to doubt the classification result". The information processing apparatus 100 outputs the generated message so that the user may refer to the message.

For example, the information processing apparatus 100 displays an evaluation screen 1000 so that the user may refer to the evaluation screen 1000. For example, the evaluation screen 1000 includes a notification that the target data set satisfies the conditions A and B and does not satisfy the condition C. For example, the evaluation screen 1000 includes the classification result of the target data set. For example, the evaluation screen 1000 includes positive patterns matching the target data set as the grounds for positively evaluating the classification result of the target data set. For example, the evaluation screen 1000 includes the notification that there is no negative pattern matching the target data set as the grounds for positively evaluating the classification result of the target data set. For example, the evaluation screen 1000 includes the generated message.

In this way, the information processing apparatus 100 may make it easy for the user to recognize how reliable the classification result of the target data set with the classifier is. For example, the information processing apparatus 100 may enable the user to recognize that there are positive patterns matching the target data set and there is no negative pattern matching the target data set.

This makes it possible for the user to, for example, positively evaluate the classification result of the target data set by understanding that the target data set is a data set easy to correctly classify with the classifier. For example, this also makes it possible for the user to refer to the positive pattern matching the target data set as the reason to positively evaluate the classification result of the target data set, and easily understand that the classification result of the target data set is positively evaluated. For example, this makes it possible for the user to refer to the non-existence of a negative pattern matching the target data set as the reason for the positive evaluation, and easily understand that the classification result of the target data set is positively evaluated. Next, description proceeds to FIG. 11.

In FIG. 11, the information processing apparatus 100 receives a target data set. For example, in the example in FIG. 11, the target data set is a data set having an attribute value pattern specified as ({A, B, C}). Using the classifier, the information processing apparatus 100 classifies the target data set into any one of the multiple classes.

By referring to the positive pattern management table 800, the information processing apparatus 100 determines whether or not there is a positive pattern matching the target data set. In the example in FIG. 11, the information processing apparatus 100 determines that there are a positive pattern ({A, B}) and a positive pattern ({B}). By referring to the negative pattern management table 900, the information processing apparatus 100 determines whether or not there is a negative pattern matching the target data set. In the example in FIG. 11, the information processing apparatus 100 determines that there is a negative pattern ({A, C}).

Accordingly, the information processing apparatus 100 may identify whether the classifier is good or poor at classifying the target data set, and provide the determination result as a guideline for evaluating the reliability of the classification result of the target data set. If there is a negative pattern, the information processing apparatus 100 may judge that the classifier is poor at classifying the target data set and rate the reliability of the classification result of the target data set as relatively low.

If there is a negative pattern even when there is a positive pattern, the information processing apparatus 100 negatively evaluates the classification result of the target data set. For example, "negatively evaluate" means to rate the reliability of the classification result of the target data set as relatively low. The information processing apparatus 100 generates a message indicating that the classification result of the target data set is negatively evaluated. For example, the message is "Note That Data Set Matches ({A, C}) Having High Incorrect Classification Rate". The information processing apparatus 100 outputs the generated message so that the user may refer to the message.

For example, the information processing apparatus 100 displays an evaluation screen 1100 so that the user may refer to the evaluation screen 1100. For example, the evaluation screen 1100 includes a notification that the target data set satisfies the conditions A, B, and C. For example, the evaluation screen 1100 includes the classification result of the target data set. For example, the evaluation screen 1100 includes the positive patterns matching the target data set. For example, the evaluation screen 1100 includes the negative pattern matching the target data set as the grounds for negatively evaluating the classification result of the target data set. For example, the evaluation screen 1100 includes the generated message.

In this way, the information processing apparatus 100 may make it easy for the user to recognize how reliable the classification result of the target data set with the classifier is. For example, the information processing apparatus 100 may enable the user to recognize that there is the negative pattern matching target data set.

This makes it possible for the user to, for example, negatively evaluate the classification result of the target data set by understanding that the target data set is a data set difficult to correctly classify with the classifier. For example, this also makes it possible for the user to refer to the negative pattern matching the target data set as the reason to negatively evaluate the classification result of the target data set, and easily understand that the classification result of the target data set is negatively evaluated.

### (Determination Processing Procedure)

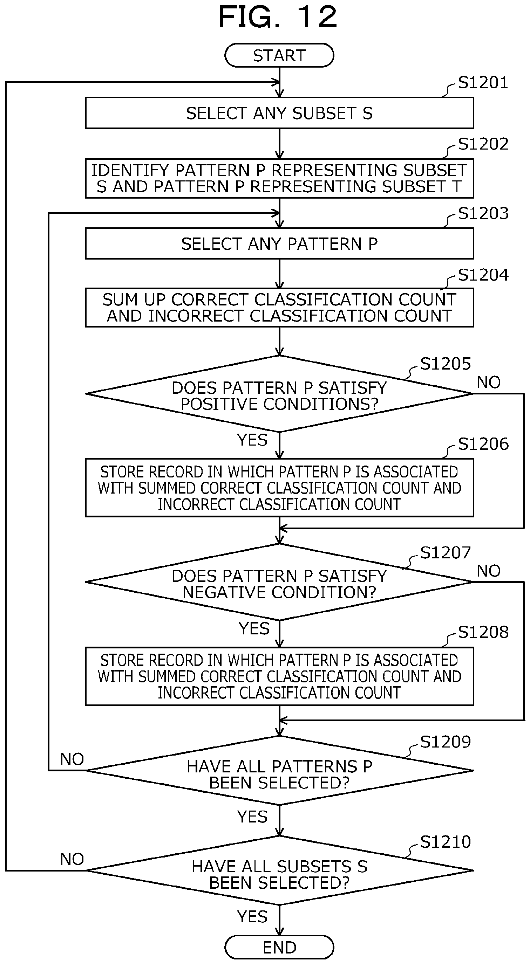

Next, an example of a determination processing procedure to be executed by the information processing apparatus 100 will be described with reference to FIG. 12. The determination processing is implemented by, for example, the CPU 301, a storage area such as the memory 302 or the recording medium 305, and the network I/F 303 illustrated in FIG. 3.

FIG. 12 is a flowchart illustrating an example of the determination processing procedure. In FIG. 12, the information processing apparatus 100 selects any subset S from among subsets S yet to be selected as processing targets in a condition set (step S1201). The condition set is, for example, ({A, B, C}) or the like. The subsets S include, for example, ({A, B}) and the like.

Next, the information processing apparatus 100 identifies a pattern P representing the selected subset S and one or more patterns P respectively representing one or more subsets T, each of which may be formed by negating one or more elements included in the selected subset S (step S1202). The subsets T include, for example, ({->A, B}) and the like.

Next, the information processing apparatus 100 selects any pattern P from among the patterns P which are included in the identified patterns P and which are yet to be selected as processing targets (step S1203). Regarding samples for the selected pattern P, the information processing apparatus 100 sums up the correct classification count and the incorrect classification count obtained with a classifier of interest (step S1204).

Next, the information processing apparatus 100 determines whether or not the selected pattern P satisfies positive conditions based on the summed correct classification count and incorrect classification count (step S1205). The positive conditions are, for example, that the correct classification count is equal to or greater than a threshold and the correct classification rate is equal to or higher than a threshold. Here, if the positive conditions are not satisfied (step S1205: No), the information processing apparatus 100 proceeds to processing at step S1207. If the positive conditions are satisfied (step S1205: Yes), the information processing apparatus 100 proceeds to processing at step S1206.

At step S1206, the information processing apparatus 100 stores, in the positive pattern management table 800, a record in which the selected pattern P is associated with the summed correct classification count and incorrect classification count (step S1206). Next, the information processing apparatus 100 proceeds to processing at step S1207.

At step S1207, the information processing apparatus 100 determines whether or not the selected pattern P satisfies a negative condition based on the summed incorrect classification count (step S1207). The negative condition is, for example, that the incorrect classification count is equal to or greater than a threshold. Here, if the negative condition is not satisfied (step S1207: No), the information processing apparatus 100 proceeds to processing at step S1209. On the other hand, if the negative condition is satisfied (step S1207: Yes), the information processing apparatus 100 proceeds to processing at step S1208.

At step S1208, the information processing apparatus 100 stores, in the negative pattern management table 900, a record in which the selected pattern P is associated with the summed correct classification count and incorrect classification count (step S1208). Next, the information processing apparatus 100 proceeds to processing at step S1209.

At step S1209, the information processing apparatus 100 determines whether or not all the patterns P have been selected as the processing targets (step S1209). Here, if an unselected pattern P remains (step S1209: No), the information processing apparatus 100 returns to the processing at step S1203. On the other hand, if all the patterns P have been selected (step S1209: Yes), the information processing apparatus 100 proceeds to processing at step S1210.

At step S1210, the information processing apparatus 100 determines whether or not all the subsets S have been selected as the processing targets (step S1210). Here, if an unselected subset S remains (step S1210: No), the information processing apparatus 100 returns to the processing at step S1201. On the other hand, if all the subsets S have been selected (step S1210: Yes), the information processing apparatus 100 ends the determination processing.

### (CLASSIFICATION PROCESSING PROCEDURE)

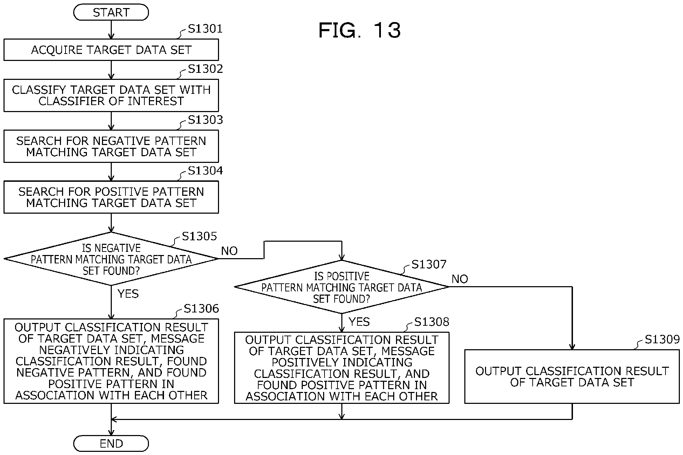

Next, an example of a classification processing procedure to be executed by the information processing apparatus 100 will be described with reference to FIG. 13. The classification processing is implemented by, for example, the CPU 301, a storage area such as the memory 302 or the recording medium 305, and the network I/F 303 illustrated in FIG. 3.

FIG. 13 is a flowchart illustrating an example of the classification processing procedure. In FIG. 13, the information processing apparatus 100 acquires a target data set (step S1301).

Next, the information processing apparatus 100 classifies the target data set by using a classifier of interest (step S1302). Based on the negative pattern management table 900, the information processing apparatus 100 searches for a negative pattern matching the target data set (step S1303). Based on the positive pattern management table 800, the information processing apparatus 100 searches for a positive pattern matching the target data set (step S1304).

After that, the information processing apparatus 100 determines whether or not a negative pattern matching the target data set is found (step S1305). Here, if the negative pattern is not found (step S1305: No), the information processing apparatus 100 proceeds to processing at step S1307. On the other hand, if the negative pattern is found (step S1305: Yes), the information processing apparatus 100 proceeds to processing at step S1306.

At step S1306, the information processing apparatus 100 outputs the classification result of the target data set, the message negatively indicating the classification result, the found negative pattern, and the found positive pattern in association with each other (step S1306). After that, the information processing apparatus 100 ends the classification processing.

At step S1307, the information processing apparatus 100 determines whether or not a positive pattern matching the target data set is found (step S1307). Here, if the positive pattern is not found (step S1307: No), the information processing apparatus 100 proceeds to processing at step S1309. On the other hand, if the positive pattern is found (step S1307: Yes), the information processing apparatus 100 proceeds to processing at step S1308.

At step S1308, the information processing apparatus 100 outputs the classification result of the target data set, the message positively indicating the classification result, and the found positive pattern in association with each other (step S1308). After that, the information processing apparatus 100 ends the classification processing.

At step S1309, the information processing apparatus 100 outputs the classification result of the target data set (step S1309). After that, the information processing apparatus 100 ends the classification processing.

### (Selection Processing Procedure)

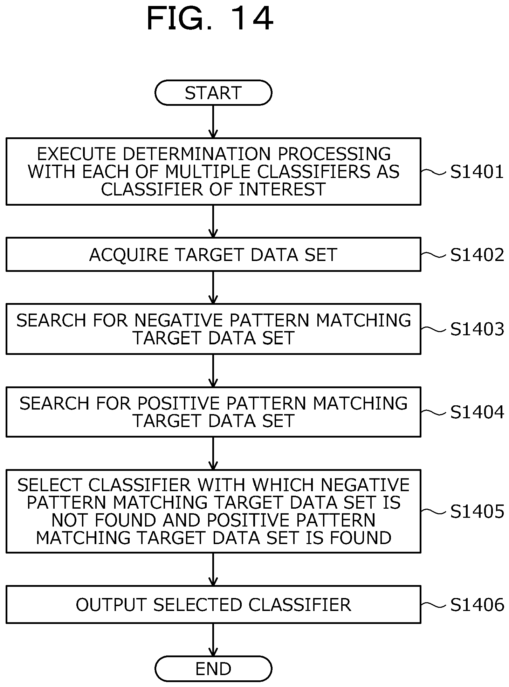

Next, an example of a selection processing procedure to be executed by the information processing apparatus 100 will be described with reference to FIG. 14. The selection processing is implemented by, for example, the CPU 301, the storage area such as the memory 302 or the recording medium 305, and the network I/F 303 illustrated in FIG. 3.

FIG. 14 is a flowchart illustrating an example of selection processing procedure. In FIG. 14, the information processing apparatus 100 executes the determination processing illustrated in FIG. 12 by using each of the multiple classifiers as a classifier of interest (step S1401).

Next, the information processing apparatus 100 acquires a target data set (step S1402). Based on the negative pattern management table 900 for each classifier, the information processing apparatus 100 searches for a negative pattern matching the target data set among the negative patterns for the classifier (step S1403). Based on the positive pattern management table 800 for each classifier, the information processing apparatus 100 searches for a positive pattern matching the target data set among the positive patterns for the classifier (step S1404).

Among the multiple classifiers, the information processing apparatus 100 selects a classifier for which the negative pattern matching the target data set is not found but the positive pattern matching the target data set is found (step S1405). The information processing apparatus 100 outputs the selected classifier (step S1406). After that, the information processing apparatus 100 ends the selection processing.

In each of the flowcharts illustrated in FIGs. 12 to 14, the information processing apparatus 100 may execute the processing while changing the processing order of some steps. For example, the processing order of steps S1303 and S1304 may be interchanged. The information processing apparatus 100 may skip the processing at one or some steps in each of the flowcharts illustrated in FIGs. 12 to 14.

As described above, in the case of classifying data sets for each of multiple attribute value patterns with a classifier, the information processing apparatus 100 may acquire an index value indicating how many data sets have the correct classification results. The information processing apparatus 100 may identify each first attribute value pattern having a relatively small number of data sets with the correct classification results among the multiple attribute value patterns, based on the acquired index values. In the case of classifying a target data set, the information processing apparatus 100 may determine whether or not the first attribute value pattern matching the target data set exists among the identified first attribute value patterns. Thus, the information processing apparatus 100 may identify what attribute value pattern a data set easy to classify with the classifier tends to have. For example, the information processing apparatus 100 may identify what attribute value pattern of a data set the classifier is good at classifying.

The information processing apparatus 100 may identify each second attribute value pattern having a relatively large number of data sets with the correct classification results among the multiple attribute value patterns, based on the acquired index values. In the case of classifying a target data set, the information processing apparatus 100 may determine whether or not the second attribute value pattern matching the target data set exists among the identified second attribute value patterns. Thus, the information processing apparatus 100 may identify what attribute value pattern a data set difficult to classify with the classifier tends to have. For example, the information processing apparatus 100 may identify what attribute value pattern of a data set the classifier is poor at classifying.

If the first attribute value pattern matching the target data set does not exist and the second attribute value pattern matching the target data set exists, the information processing apparatus 100 may output the first information indicating that the classification result of the target data set with the classifier is affirmed. In this way, the information processing apparatus 100 may make it easy for the user to recognize and understand how reliable the classification result of the target data set with the classifier is.

If the first attribute value pattern matching the target data set exists among the identified first attribute value patterns, the information processing apparatus 100 may output the second information indicating that the classification result of the target data set with the classifier is denied. In this way, the information processing apparatus 100 may make it easy for the user to recognize and understand how reliable the classification result of the target data set with the classifier is.

In the case of classifying a target data set, if the first attribute value pattern matching the target data set exists among the identified first attribute value patterns, the information processing apparatus 100 may output the first attribute value pattern matching the target data set. In this way, the information processing apparatus 100 may make it easy for the user to recognize and understand how reliable the classification result of the target data set with the classifier is.

In the case of classifying a target data set, if the second attribute value pattern matching the target data set exists among the identified second attribute value patterns, the information processing apparatus 100 may output the second attribute value pattern matching the target data set. In this way, the information processing apparatus 100 may make it easy for the user to recognize and understand how reliable the classification result of the target data set with the classifier is.

The information processing apparatus 100 may output the first information indicating that the classification result of the target data set with the classifier is affirmed in association with the classification result. In this way, the information processing apparatus 100 may make it easy for the user to recognize and understand how reliable the classification result of the target data set with the classifier is.

The information processing apparatus 100 may output the second information indicating that the classification result of the target data set with the classifier is denied in association with the classification result. In this way, the information processing apparatus 100 may make it easy for the user to recognize and understand how reliable the classification result of the target data set with the classifier is.

In the case of classifying data sets for each of multiple attribute value patterns with each of multiple classifiers, the information processing apparatus 100 may acquire an index value indicating how many data sets have correct classification results with the classifier. For each of the classifiers, the information processing apparatus 100 may identify a first attribute value pattern having a relatively small number of data sets with the correct classification results with the classifier among the multiple attribute value patterns based on the acquired index values. In the case of classifying a target data set, the information processing apparatus 100 may select and output a classifier with which any first attribute value pattern matching the target data set does not exist among the multiple classifiers. Accordingly, the information processing apparatus 100 may select and use the classifier suitable for the target data set among the multiple classifiers.

In the case of classifying data sets for each of multiple attribute value patterns with each of multiple classifiers, the information processing apparatus 100 may acquire an index value indicating how many data sets have correct classification results with the classifier. For each of the classifiers, the information processing apparatus 100 may identify a second attribute value pattern having a relatively large number of data sets with the correct classification results with the classifier among the multiple attribute value patterns based on the acquired index values. In the case of classifying a target data set, the information processing apparatus 100 may select and output a classifier with which the second attribute value pattern matching the target data set exists among the multiple classifiers. Accordingly, the information processing apparatus 100 may select and use the classifier suitable for the target data set among the multiple classifiers.

The information processing apparatus 100 may output a result obtained by evaluating the likelihood of the classification result of the target data set with each classifier based on the first attribute value pattern matching the target data set and the second attribute value pattern matching the target data set. In this way, the information processing apparatus 100 may make it easy for the user to recognize and understand how reliable the classification result of the target data set with the classifier is.

The information processing method described in the present embodiment may be implemented by causing a computer, such as a PC or a workstation, to execute a program prepared in advance. The information processing program described in the present embodiment is recorded on a computer-readable recording medium and is read from the recording medium to be executed by the computer. The recording medium is a hard disk, a flexible disk, a compact disc (CD)-ROM, a magneto optical (MO) disc, a Digital Versatile Disc (DVD), or the like. The information processing program described in the present embodiment may be distributed via a network, such as the Internet.

### Citation List

### Non Patent Literature

NPL 1: Leo Breiman and Nong Shang, "Born again trees", University of California, Berkeley, Berkeley, CA, Technical Report 1.2 (1996): 4

### Reference Signs List

- 100: information processing apparatus
- 110: classifier
- 111: data
- 200: reliability evaluation system
- 201: information accumulation apparatus
- 202: client apparatus
- 210: network
- 300: bus
- 301: CPU
- 302: memory
- 303: network I/F
- 304: recording medium I/F
- 305: recording medium
- 400: storage unit
- 401: acquisition unit
- 402: identification unit
- 403: determination unit
- 404: classification unit
- 405: output unit
- 500: Venn diagram
- 501, 502, 503, 504, 505, 512, 513, 523: condition set
- 600: tree
- 601, 603: node
- 602, 604, 605: class
- 612, 613, 634, 635, 636: edge
- 700: summation information management table
- 800: positive pattern management table
- 900: negative pattern management table
- 1000, 1100: evaluation screen

## Claims

1. An information processing program for causing a computer to execute processing comprising:
acquiring an index value, the index value indicating how many data sets have correct classification results obtained by classifying data sets for each of a plurality of attribute value patterns different from each other with a classifier;
identifying, based on the acquired index values, one or more of first attribute value patterns among the plurality of attribute value patterns, each of the one or more of the first attribute value patterns being an attribute value pattern having a relatively small number of data sets with the correct classification results;
in a case of classifying a target data set, determining whether at least any one of the identified one or more of first attribute value patterns matches the target data set; and
outputting a result of the determining.

2. The information processing program according to claim 1, wherein
the identifying includes
identifying, based on the acquired index values, one or more of second attribute value patterns among the plurality of attribute value patterns, each of the one or more of second attribute value patterns being an attribute value pattern having a relatively large number of data sets with the correct classification results, and
the determining includes in the classifying of the target data set, determining whether at least any one of the identified one or more of second attribute value patterns matches the target data set.

3. The information processing program according to claim 2, the processing further comprising:
outputting first information indicating that a classification result of the target data set with the classifier is affirmed, when none of the identified one or more of first attribute value patterns matches the target data and at least any one of the identified one or more of second attribute value patterns matches the target data set.

4. The information processing program according to any one of claims 1 to 3, causing the computer to execute a process comprising:
outputting second information indicating that a classification result of the target data set with the classifier is denied, when at least any one of the identified one or more of first attribute value patterns matches the target data set.

5. The information processing program according to any one of claims 1 to 4, causing the computer to execute a process comprising:
in the classifying of the target data set, when at least any one of the identified one or more of first attribute value patterns matches the target data set, outputting the first attribute value pattern matching the target data set.

6. The information processing program according to claim 2, causing the computer to execute a process comprising:
in the classifying of the target data set, when at least any one of the one or more of second attribute value patterns matches the target data set, outputting the second attribute value pattern matching the target data set.

7. The information processing program according to claim 2, causing the computer to execute a process comprising:
outputting first information indicating that a classification result of the target data set with the classifier is affirmed in association with the classification result, when none of the identified one or more of first attribute value patterns matches the target data set and at least any one of the identified one or more of second attribute value patterns matches the target data set.

8. The information processing program according to any one of claims 1 to 7, causing the computer to execute a process comprising:
outputting second information indicating that a classification result of the target data set with the classifier is denied in association with the classification result, when at least any one of first attribute value patterns matches the target data set.

9. The information processing program according to any one of claims 1 to 8, wherein
the acquiring includes
acquiring the index value indicating how many data sets have correct classification results with the classifier in a case of classifying data sets for each of the plurality of attribute value patterns with each of a plurality of classifiers,
the identifying includes
identifying, for each classifier of the plurality of classifiers, the one or more of first attribute value patterns among the plurality of attribute value patterns based on the acquired index values, each of the one or more of first attribute value patterns being an attribute value pattern having a relatively small number of data sets with the correct classification results obtained by the classifier, and
in the classifying of the target data set, selecting and outputting among the plurality of classifiers, a classifier with which none of the one or more of first attribute value patterns matches the target data set.

10. The information processing program according to any one of claims 1 to 9, wherein
the acquiring includes
in the classifying of data sets for each of the plurality of attribute value patterns by each classifier of the plurality of classifiers, acquiring, an index value indicating how many data sets have correct classification results obtained by the classifier,
the identifying includes
identifying, for each classifier of the plurality of classifiers, the one or more of second attribute value patterns among the plurality of attribute value patterns based on the acquired index values, each of the one or more of second attribute value patterns having a relatively large number of data sets with the correct classification results obtained by the classifier, and
in the classifying of the target data set, selecting and outputting among the plurality of classifiers, a classifier with which at least any one of the one or more of second attribute value patterns matches the target data set.

11. The information processing program according to any one of claims 1 to 10, wherein
the acquiring includes
in the classifying of data sets for each of the plurality of attribute value patterns by each classifier of the plurality of classifiers, acquiring, an index value indicating how many data sets have correct classification results obtained by the classifier,
the identifying includes
identifying, for each classifier of the plurality of classifiers, the one or more of first attribute value patterns and the one or more second attribute value patterns among the plurality of attribute value patterns based on the acquired index values, each of the one or more of first attribute value patterns having a relatively small number of data sets with the correct classification results obtained by the classifier, each of the one or more of second attribute value patterns having a relatively large number of data sets with the correct classification results obtained by the classifier, and
in the classifying of the target data set, outputting a result obtained by evaluating, based on the first attribute value pattern matching the target data set and the second attribute value pattern matching the target data set, a likelihood of a classification result of the target data set by each of the classifiers.

12. An information processing method implemented by a computer, the method comprising:
acquiring an index value, the index value indicating how many data sets have correct classification results obtained by classifying data sets for each of a plurality of attribute value patterns different from each other with a classifier;
identifying, based on the acquired index values, one or more of first attribute value patterns among the plurality of attribute value patterns, each of the one or more of the first attribute value patterns being an attribute value pattern having a relatively small number of data sets with the correct classification results;
in a case of classifying a target data set, determining whether at least any one of the identified one or more of first attribute value patterns matches the target data set; and
outputting a result of the determining.

13. An information processing apparatus comprising a control unit configured to perform processing comprising:
acquiring an index value, the index value indicating how many data sets have correct classification results obtained by classifying data sets for each of a plurality of attribute value patterns different from each other with a classifier;
identifying, based on the acquired index values, one or more of first attribute value patterns among the plurality of attribute value patterns, each of the one or more of the first attribute value patterns being an attribute value pattern having a relatively small number of data sets with the correct classification results;
in a case of classifying a target data set, determining whether at least any one of the identified one or more of first attribute value patterns matches the target data set; and
outputting a result of the determining.
